# EUROPÄISCHE PATENTSCHRIFT

(11) **EP 1 671 526 B1**
(45) Veröffentlichungstag und Bekanntmachung des Hinweises auf die Patenterteilung: **12.09.2007**
(21) Anmeldenummer: 05025737.7
(22) Anmeldetag: 25.11.2005
(51) Int. Cl.: A01B 33/14

(54) **Bodenbearbeitungsgerät mit formschlüssig festgelegten Zinken**
Soil working apparatus with interlocking tines
Appareil de travail du sol à dents liés en forme

(30) Priorität: 16.12.2004 DE 102004060558
(43) Veröffentlichungstag der Anmeldung: 21.06.2006
(73) Patentinhaber: Lemken GmbH & Co. KG, 46519 Alpen (DE)
(72) Erfinder: Gebbeken, Martin, 46519 Alpen (DE); Meurs, Wilhelm, 46519 Alpen (DE); van Stephaudt, Johannes, 46519 Alpen (DE)
(74) Vertreter: Schulte, Jörg

(56) Entgegenhaltungen:
- EP-A- 0 761 079
- EP-A- 1 319 328
- WO-A-20/04043133
- DE-U1- 9 006 000

## Beschreibung

Die Erfindung betrifft ein Bodenbearbeitungsgerät, insbesondere Kreiselegge, mit mindestens einem quer zur Arbeitsrichtung angeordneten Rahmenkasten mit mehreren in einer quer zur Fahrtrichtung verlaufenden Reihe nebeneinander angeordneten und um aufrechte Achsen rotierend angetriebene Rotoren, die in der Regel zwei nach unten gerichtete Zinken aufweisen, wobei die Zinken jeweils ein Arbeitsteil und ein dazu abgewinkeltes Befestigungsteil aufweisen, welches in taschenförmigen Aufnahmen der Rotoren eingreift, formschlüssig mit dem Rotor verbunden ist und über Haltemittel in der Formschlussverbindung gehalten wird.

Ein derartiges Bodenbearbeitungsgerät ist der europäischen Patentanmeldung EP 1 319 328 A1 zu entnehmen. Bei dem Gegenstand dieser EP 1 319 328 A1 befinden sich die Befestigungsteile der Zinken in taschenförmigen Aufnahmen der Rotoren und sind formschlüssig mit dem jeweiligen Rotor verbunden. Über Haltemittel werden die Befestigungsteile der Zinken in der Formschlussverbindung gehalten. Um diese Formschlussverbindung herzustellen sind am Zinken Nasen und am Rotor korrespondierende Ausnehmungen oder umgekehrt vorgesehen. Dies erfordert insbesondere bei der Herstellung des Rotors einen großen Aufwand und lässt eine kostengünstige Fertigung nicht zu. Insbesondere daher, da Teile am Rotor besonders gehärtet sein müssen, um keinen frühzeitigen Verschleiß aufkommen zu lassen. Im Prinzip die gleichen Nachteile weisen die Zinken nach der EP 0761 079 A1 auf, wobei dort mit Haltestücken, die am Rotor angeschweißt sind, und Schrauben gearbeitet wird. Diese Schrauben halten jeweils nur einen Zinken, was Kosten verursacht und hohen Montageaufwand. Auch bei den Zinken gemäß DE 90 06 000 U1 ist eine Verschraubung notwendig, um den Formschluss zwischen Rotor und Befestigungsteilen zu wahren. Diese Zinken weisen somit die gleichen Nachteile wie die nach der EP 1 319 328 A1 auf. Die WO 2004/043133 A1 zeigt und beschreibt einen einteiligen Zinken und die Art seiner Befestigung am Rotor.

Der Erfindung liegt die Aufgabe zugrunde, auf einfache Weise eine einfache Verbindung der Zinken mit dem Rotor zuzulassen, ohne teure Bauteile vorsehen und aufwendige Fertigungsverfahren einhalten zu müssen, die dann auch für einen wirkungsvollen Verschleißschutz erforderlich sind.

Diese Aufgabe wird erfindungsgemäß dadurch gelöst, dass das Befestigungsteil eines Zinkens und das Befestigungsteil des benachbarten Zinkens des gleichen Rotors formschlüssig miteinander verhakt sind.

Dadurch dass das Befestigungsteil eines Zinkens nicht mehr formschlüssig mit dem Rotor verbunden ist, sondern mit dem des benachbarten Zinkens, muss der Rotor selbst nicht mehr mit besonderen Verschleißschutzvorrichtungen ausgerüstet werden oder mit entsprechenden Verschleißschutzmaßnahmen bearbeitet werden. Falls im Bereich der Formschlussverbindung zwischen den Befestigungsteilen der Zinken Verschleiß auftreten kann, führt dies zu keinem Funktionsnachteil, da nach Verschleiß der Arbeitsteile der Zinken diese nebst Befestigungsteil sehr einfach ausgetauscht werden. Neue Zinken weisen dann wieder voll funktionstüchtige Befestigungsteile auf, die ihre Funktion während der gesamten Lebensdauer der Zinken beibehalten, auch wenn diese Lebensdauer aufgrund von besonderen Härteverfahren oder Aufpanzerungsverfahren besonders lang ist.

Die Erfindung sieht weiter vor, dass das Befestigungsteil der Zinken einen Haken aufweist. Ein solcher Haken ermöglicht eine einfache Handhabung, ein einfaches Einhaken des Befestigungsteils in oder an das Befestigungsteil des benachbarten Zinkens des gleichen Rotors. Die Zinken sind dann zu einer Einheit verhakt und werden durch die Haltemittel vor einem Aushaken gesichert. Ein seitliches Verrutschen der Zinken in der taschenförmigen Ausnehmung wird verhindert, in dem das jeweilige Arbeitsteil, das zum Befestigungsteil abgewinkelt angeordnet ist sich jeweils gegen den Rotor bzw. den Rand der taschenförmigen Aufnahmen abstützt.

Die Erfindung sieht weiter vor, dass das jeweilige Befestigungsteil eines Zinkens einen Einsteckanschlag aufweist. Über den Einsteckanschlag wird die Einstecktiefe des jeweiligen Befestigungsteils in die taschenförmige Aufnahme begrenzt, und zwar noch einfacher als über die abgewinkelten Arbeitsteile der Zinken. Die jeweiligen Einsteckanschläge der Zinken eines Rotors lassen ein Einstecken der Befestigungsteile der Zinken nur so weit zu, dass sie gerade eingehakt werden können und dann formschlüssig miteinander verhakt und verbunden sind. Somit wird sichergestellt, dass ein Verschieben der ineinander verhakten Zinken in den taschenförmigen Aufnahmen nicht möglich oder nur begrenzt möglich ist. Ein geringer Verschiebeweg ist auf jeden Fall sinnvoll, um erstens das Einhaken der Befestigungsteile zu vereinfachen aber auch um den Einfluss von Schmutz und Erdreich gering zu halten. Bei einem zu geringen Spiel lässt sich in Verbindung mit Schmutz und Erdreich eine einfache Montage oder Demontage der Zinken nicht mehr realisieren.

Erfindungsgemäß ist weiter vorgesehen, dass Haltemittel für die Befestigungsteile als Keil, Riegel, Steckteil oder Anschlag ausgebildet sind. Durch die Verwendung einfacher Haltemittel für die Befestigungsteile wie z.B. Keile, Riegel oder Steckteile werden die Zinken jeweils in ihrer Arbeitsstellung sicher gehalten, können aber auch einfach nach Verschleiß durch Demontage der Haltemittel ausgetauscht werden.

Die Erfindung sieht weiter vor, dass die Befestigungsteile der Zinken eines Rotors baugleich ausgebildet sind. Durch diese Ausführungsform können zwei identisch ausgebildete Zinken an einem Rotor verwendet und miteinander verhakt werden. Dies spart Werkzeugkosten, insbesondere dann, wenn die Zinken als geschmiedete Bauteile ausgebildet sind. Dies stellt letztendlich sicher, dass auch die Kosten für die Herstellung der eigentlichen Zinken in vertretbaren Grenzen bleiben.

Weiter sieht die Erfindung vor, dass die Haltemittel die Haken in Formschlussverbindung haltend angeordnet und ausgebildet sind. Hiermit ist also erstmals eine Lösung gefunden, bei der die jeweils beiden Zinken, die identisch ausgebildet sind, ineinander verhakt werden, wobei diese Formschlussverbindung dann durch Einschieben bzw. Anordnen eines Haltemittels so komplettiert wird, dass damit die erreichte Formschlussverbindung garantiert auch während des Betriebes erhalten bleibt. Die Haltemittel können einfach eingeschoben und festgelegt werden, sodass damit die beiden Zinken ineinander gehakt festgelegt sind und ohne Entfernen des Haltemittels nicht aus dieser Formschlussverbindung herauszunehmen sind.

Um sowohl das Anordnen wie auch das wieder Entfernen der Haltemittel zu vereinfachen, sieht die Erfindung vor, dass die Haltemittel über einen federbelasteten Klappbügel verfügen. Dieser Klappbügel erlaubt es, das Haltemittel im entspannten Zustand aufzuschieben und so anzuordnen, dass durch Verschwenken des federbelasteten Klappbügels dieser sicher verspannt und damit die Formschlussverbindung zwischen den beiden identisch ausgebildeten Zinken fixiert und sichert. So bleibt diese Formschlussverbindung während des gesamten Betriebes erhalten.

Die Erfindung zeichnet sich insbesondere dadurch aus, dass ein Bodenbearbeitungsgerät geschaffen ist, insbesondere eine Kreiselegge, bei der die Zinken sicher mit einem Rotor verbunden sind, aber auch äußerst einfach und schnell gewechselt werden können. Dabei werden die beiden gleich ausgebildeten Zinken mit ihren Haken ineinander gesteckt und dann durch Haltemittel fixiert, sodass sie in der erreichten Formschlussverbindung verharren, aber auch leicht wieder daraus befreit werden können. Insbesondere durch die hakenförmige oder aber auch labyrinthartige Verbindung der Zinken untereinander lässt sich eine schnelle und zeitsparende Demontage bzw. Montage der Zinken sicherstellen. Beide Zinken sind nunmehr einfach mit dem Rotor verbunden, ohne dass dieser besonders behandelt werden muss.

Weitere Einzelheiten und Vorteile des Erfindungsgegenstandes ergeben sich aus der nachfolgenden Beschreibung und der zugehörigen Zeichnungen, in denen ein Ausführungsbeispiel mit den dazu notwendigen Einzelheiten und Einzelteilen dargestellt ist. Es zeigen:
- Figur 1: ein Bodenbearbeitungsgerät in Form einer Kreiselegge in Seitenansicht,
- Figur 2: eine Explosionsdarstellung des Rotors,
- Figur 3: eine Ansicht der Unterseite eines Rotors mit eingehakten Zinken,
- Figur 4: die Ansicht nach Fig. 3 mit Haltemittel und Einsteckanschlägen und
- Figur 5: einen Rotor in Seitenansicht.

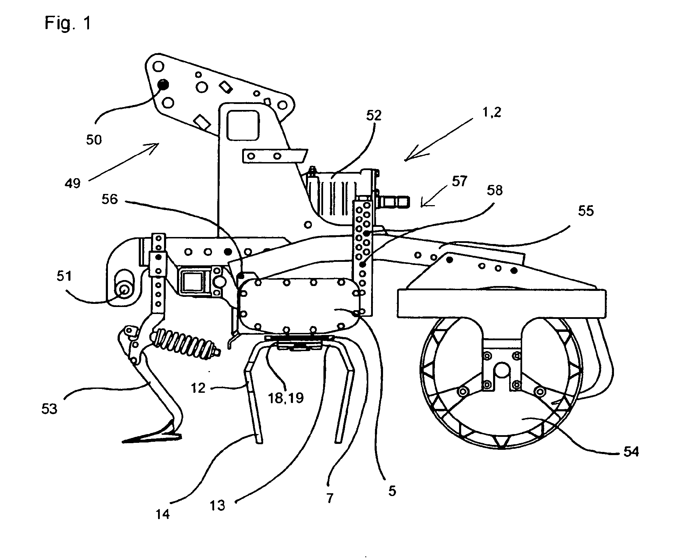

Figur 1 zeigt ein Bodenbearbeitungsgerät 1 in Form einer Kreiselegge 2 mit einem Dreipunktturm 49, der einen Verbindungspunkt 50 für die Verbindung mit einem nicht dargestellten Traktoroberlenker und weitere Verbindungspunkte 51 für die Verbindung mit nicht dargestellten Traktorunterlenkern aufweist. Unterhalb des Dreipunktturms 49 ist der Rahmenkasten 5 angeordnet. Auf diesem Rahmenkasten 5 befindet sich der Antrieb der Rotoren 7, hier in Form eines Getriebes 52. Vor dem Rahmenkasten 5 sind die Spurlockerer 53 angeordnet. Hinter dem Rahmenkasten 5 befindet sich die Walze 54, die über die Träger 55 um die Achse 56 schwenkbar und tiefeneinstellbar mit dem Rahmenkasten 5 verbunden ist. Eine Tiefeneinstellung der Kreiselegge 2 erfolgt mit Hilfe der Stiftverstellung 57 mit den Steckstiften 58. Der Rotor 7, der unterhalb des Rahmenkastens 5 drehbar angeordnet ist, weist Taschen 19 mit taschenförmigen Aufnahmen 18 auf, in denen die Zinken 12 mit ihrem Befestigungsteil 13 eingesteckt und arretiert sind. Der Zinken 12 weist neben dem Befestigungsteil 13 das Arbeitsteil 14 auf. Der Einfachheit halber ist in der Figur 1 nur ein Rotor 7 mit Zinken 12 dargestellt. In der Regel befindet sich am Rahmenkasten 5 mehrere Rotoren 7 mit Zinken 12.

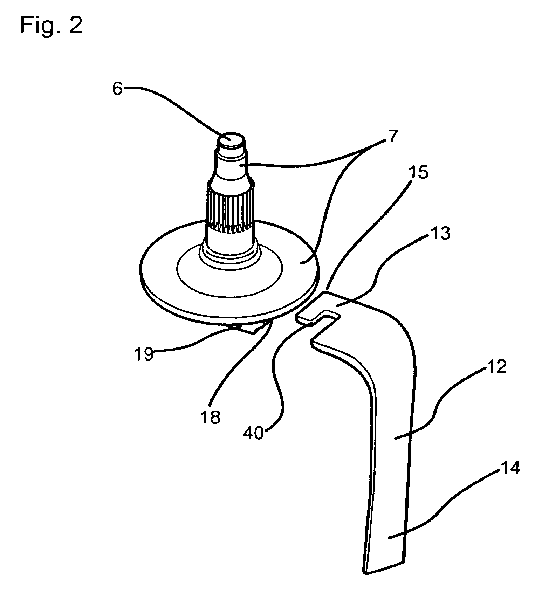

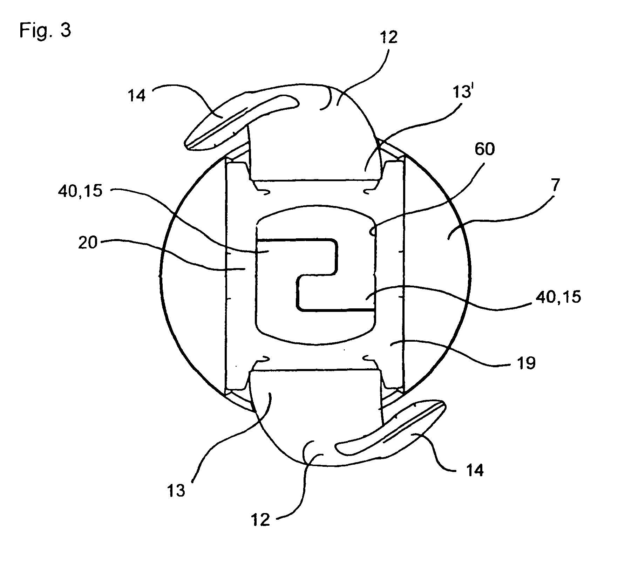

Die Figur 2 zeigt eine perspektivische Darstellung des Rotors 7 mit seiner Achse 6. Der Einfachheit halber ist in der Figur 2 nur ein Zinken 12 mit Befestigungsteil 13 und Arbeitsteil 14 dargestellt. Die Figur 2 verdeutlicht auch, wie das Befestigungsteil 13, das als Haken 40 ausgebildet ist, in die taschenförmige Aufnahme 18 der Tasche 19 gesteckt wird. Das Befestigungsteil 13 verjüngt sich zum Ende 15 hin und erleichtert so das Einführen und die Demontage des Befestigungsteils 13 in die taschenförmige Aufnahme 18 des Rotors 7. Das Befestigungsteil 13 ist als Haken 40 ausgebildet. Mit diesem Haken 40 wird das Befestigungsteil 13 eines Zinkens 12 mit dem Haken des nicht dargestellten benachbarten Zinkens formschlüssig verbunden. Näheres dazu ist der Figur 3 zu entnehmen.

Die Figur 3 zeigt eine Ansicht von der Unterseite des Rotors 7 mit dem in die Tasche 19 eingesteckten Zinken 12. Die Figur 3 verdeutlicht insbesondere die Ausbildung des Befestigungsteiles 13, 13' mit dem Haken 40. Die beiden Haken 40, 40' der Zinken 12 eines Rotors 7 sind miteinander formschlüssig verhakt. In Verbindung mit den Einsteckanschlägen 47 werden die Zinken 12 einfach formschlüssig miteinander verbunden und fixiert. Ein Hin- und Herrutschen der Befestigungsteile 13, 13' der Zinken 12 in der Tasche 19 wird dadurch verhindert. Im mittleren Bereich 20 der Tasche 19 ist so viel Platz vorgesehen, dass die verjüngten Enden 15 des Befestigungsteils 13 überlappend übereinander geschoben werden können, und zwar so weit bis durch nach Innendrücken der Arbeitsteile 14 die Haken 40 formschlüssig ineinander greifen. Über nicht dargestellte Haltemittel 21 werden die Befestigungsteile 13, 13' über die Haken 40 in Formschlussverbindung gehalten.

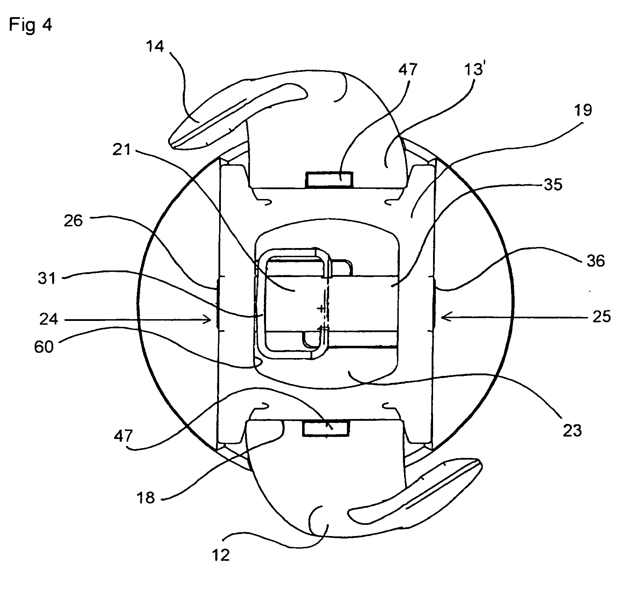

Die Figur 4 zeigt eine Ansicht von der Unterseite des Rotors 7 mit montierten Zinken 12 und dem Haltemittel 21. Das Haltemittel 21 besteht aus einem klappsteckerförmigen Keil 35 mit Klappbügel 31. Die Tasche 19 weist seitlich Durchstecköffnungen 24, 25 auf. In die Durchstecköffnungen 24 wird der Keil mit seiner Spitze 26 durch die Öffnungen 23 gesteckt, zurückgeschoben, so dass das andere Ende 36 in die gegenüberliegende Durchstecköffnung 25 eingreift und durch Umklappen des Klappbügels 31 gegen Herausfallen gesichert ist. Das andere Ende des Keils 35 weist einen Anschlag 61 auf, der ein Durchrutschen des anderen Endes 36 des Keils 35 durch die gegenüberliegende Durchstecköffnung 25 verhindert. Der Keil 35 kann nicht herausrutschen, da er sich zum einen mit dem Klappbügel 31 gegen die Innenseite 60 der Öffnung 23 der Tasche 19 abstützt und zum anderen über den Anschlag 61.

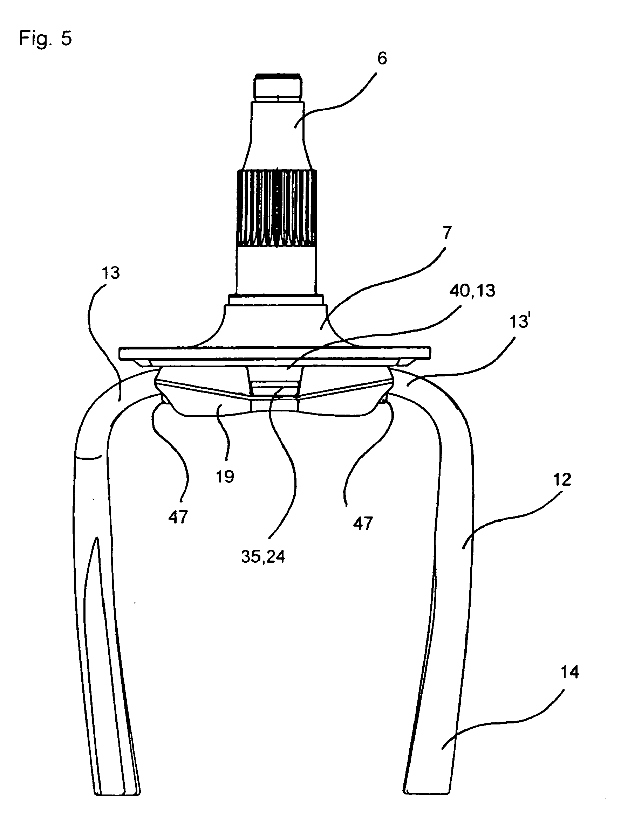

Die Figur 5 zeigt eine Seitenansicht eines Rotors 7 mit Achse 6. Sie verdeutlicht, wie der Keil 35 unterhalb der Befestigungsteile 13 und der Haken 40 in der Durchstecköffnung der Tasche 19 positioniert ist. Im Bereich der Befestigungsteile 13 sind auch die Einsteckanschläge 47 angedeutet.

## Patentansprüche

1. Bodenbearbeitungsgerät (1), insbesondere Kreiselegge (2), mit mindestens einem quer zur Arbeitsrichtung angeordneten Rahmenkasten (5) mit mehreren in einer quer zur Fahrtrichtung verlaufenden Reihe nebeneinander angeordneten und um aufrechte Achsen (6) rotierend angetriebene Rotoren (7), die in der Regel zwei nach unten gerichtete Zinken (12) aufweisen, wobei die Zinken (12) jeweils ein Arbeitsteil (14) und ein dazu abgewinkeltes Befestigungsteil (13) aufweisen, welches in taschenförmigen Aufnahmen (18) der Rotoren (7) eingreift, formschlüssig mit dem Rotor (7) verbunden ist und über Haltemittel (21) in der Formschlussverbindung gehalten wird,
**dadurch gekennzeichnet,**
**dass** das Befestigungsteil (13) eines Zinkens (12) und das Befestigungsteil (13') des benachbarten Zinkens (12) des gleichen Rotors (7) formschlüssig miteinander verhakt sind.

2. Bodenbearbeitungsgerät nach Anspruch 1,
**dadurch gekennzeichnet,**
**dass** das Befestigungsteil (13, 13') der Zinken (12) einen Haken (40) aufweist.

3. Bodenbearbeitungsgerät nach Anspruch 1,
**dadurch gekennzeichnet,**
**dass** das jeweilige Befestigungsteil (13, 13') eines Zinkens (7) einen Einsteckanschlag (47) aufweist.

4. Bodenbearbeitungsgerät nach Anspruch 1,
**dadurch gekennzeichnet,**
**dass** Haltemittel (21) für die Befestigungsteile (13, 13') als Keil (35), Riegel, Steckteil oder Anschlag ausgebildet sind.

5. Bodenbearbeitungsgerät nach einem der vorhergehenden Ansprüche,
**dadurch gekennzeichnet,**
**dass** die Befestigungsteile (13, 13') der Zinken (12) eines Rotors (12) baugleich ausgebildet sind.

6. Bodenbearbeitungsgerät nach einem der vorhergehenden Ansprüche,
**dadurch gekennzeichnet,**
**dass** die Haltemittel (21) die Haken (40) in Formschlussverbindung haltend angeordnet und ausgebildet sind.

7. Bodenbearbeitungsgerät nach einem der vorhergehenden Ansprüche,
**dadurch gekennzeichnet,**
**dass** die Haltemittel (21) über einen federbelasteten Klappbügel (31) verfügen.

## Claims

1. A soil working apparatus (1), in particular circular spike harrow (2), with at least one box frame (5) which is disposed transversely to the working direction and comprises a plurality of rotors (7) which are disposed side by side in a row extending transversely to the direction of travel, are driven so as to rotate about upright shafts (6), which rotors as a rule have two downward directed tines (12), wherein the tines (12) in each case comprise a working part (14) and a fastening part (13) which is bent at an angle to the latter, which fastening part engages in pocket-shaped receptacles (18) of the rotors (7), is positively connected to the rotor (7) and is retained in the positive connection via retaining means (21),
**characterized in that**
the fastening part (13) of one tine (12) and the fastening part (13') of the adjacent tine (12) of the same rotor (7) are positively hooked together.

2. The soil working apparatus according to Claim 1,
**characterized in that**
the fastening part (13, 13') of the tines (12) includes a hook (40).

3. The soil working apparatus according to Claim 1,
**characterized in that**
the respective fastening part (13, 13') of a tine (12) includes an insertion stop (47).

4. The soil working apparatus according to Claim 1,
**characterized in that**
retaining means (21) for the fastening parts (13, 13') are formed as a wedge (35), locking bar, plug-in part or stop.

5. The soil working apparatus according to any one of the preceding Claims,
**characterized in that**
the fastening parts (13, 13') of the tines (12) of a rotor (7) are identically constructed.

6. The soil working apparatus according to any one of the preceding Claims,
**characterized in that**
the retaining means (21) are disposed and formed so as to retain the hooks (40) in a positive connection.

7. The soil working apparatus according to any one of the preceding Claims,
**characterized in that**
the retaining means (21) have a spring-loaded hinged bow (31).

## Revendications

1. Appareil de traitement de sol (1), en particulier herse rotative (2) avec au moins une boîte de cadre (5) disposée transversalement par rapport au sens de travail avec plusieurs rotors (7) entraînés disposés l'un à côté de l'autre en une rangée transversalement par rapport au sens de roulement et qui sont rotatifs autour d'axes (6) verticaux, rotors comportant en règle générale deux dents (12) orientées vers le bas, étant donné que les dents (12) présentent chacune une pièce de travail (14) et une pièce de fixation (13) coudée qui prend dans des logements (18) en forme de poches des rotors (7), qui est assemblée par forme avec le rotor (7) et peut être maintenue par l'intermédiaire de moyens d'arrêt (21) dans l'assemblage par forme,
**caractérisé en ce que**
la pièce de fixation (13) d'une dente (12) et la pièce de fixation (13') de la dent voisine (12) du même rotor (7) sont crabotées l'une avec l'autre.

2. Appareil de traitement de sol selon la revendication 1,
**caractérisé en ce que**
la pièce de fixation (13, 13') des dents (12) présente un crochet (40).

3. Appareil de traitement de sol selon la revendication 1,
**caractérisé en ce que**
chaque pièce de fixation (13, 13') d'une dent (12) présente une butée embrochable (47).

4. Appareil de traitement de sol selon la revendication 1,
**caractérisé en ce que**
les moyens d'arrêt (21) pour les pièces de fixation (13, 13') sont formés comme cale (35), verrou, pièce embrochable ou butée.

5. Appareil de traitement de sol selon l'une quelconque des revendications précédentes,
**caractérisé en ce que**
les pièces de fixation (13, 13') des dents (12) d'un rotor (7) ont la même forme constructive.

6. Appareil de traitement de sol selon l'une quelconque des revendications précédentes,
**caractérisé en ce que**
les moyens d'arrêt (21) sont disposés et formés de manière à retenir les crochets (40) en assemblage par forme.

7. Appareil de traitement de sol selon l'une quelconque des revendications précédentes,
**caractérisé en ce que**
les moyens d'arrêt (21) disposent d'un archet pivotant (31) commandé par ressort.
